# EUROPÄISCHE PATENTSCHRIFT

(11) **EP 1 771 275 B1**
(45) Veröffentlichungstag und Bekanntmachung des Hinweises auf die Patenterteilung: **13.10.2010**
(21) Anmeldenummer: 05770639.2
(22) Anmeldetag: 16.07.2005
(51) Int. Cl.: B23P 6/00, B23P 15/04, B23K 26/34, F01D 5/00, B23K 33/00

(54) **VERFAHREN ZUM REPARIEREN EINES BAUTEILS**
METHOD FOR REPAIRING A COMPONENT
PROCÉDÉ POUR RÉPARER UN COMPOSANT

(30) Priorität: 24.07.2004 DE 102004036066
(43) Veröffentlichungstag der Anmeldung: 11.04.2007
(73) Patentinhaber: MTU Aero Engines GmbH, 80995 München (DE)
(72) Erfinder: MEIER, Reinhold, 84405 Dorfen (DE)
(86) Internationale Anmeldenummer: PCT/DE2005/001257
(87) Internationale Veröffentlichungsnummer: WO 2006/010357

(56) Entgegenhaltungen:
- EP-A- 1 138 431
- US-A- 4 003 115
- US-A- 5 233 150
- US-A1- 2002 091 459
- US-B1- 6 321 448
- US-B1- 6 332 272
- US-B1- 6 542 843
- US-B1- 6 673 169
- KHROMCHENKO F A ET AL: "TECHNOLOGY FOR REPAIRING WORKING BLADES OF STEAM TURBINES. PART 2. REPAIR BY THE COMBINED WELDING AND SURFACING METHOD" WELDING INTERNATIONAL, WOODHEAD PUBLISHING LIMITED, ABINGTON, CAMBRIDGE, GB, Bd. 13, Nr. 8, 1999, Seiten 660-664, XP000847359 ISSN: 0950-7116

## Beschreibung

Die Erfindung betrifft ein Verfahren zum Reparieren eines Bauteils, insbesondere eines statorseitigen Bauteils einer Gasturbine, nach dem Oberbegriff des Patentanspruchs 1. Ein solches Verfahren ist aus dem Dokument US 6 332 272 B1 bekannt.

Beim Reparieren von Bauteilen, insbesondere von statorseitigen Bauteilen einer Gasturbine, kann es erforderlich sein, beschädigte Abschnitte aus einem zu reparierenden Bauteil herauszutrennen und durch einen Neuabschnitt zu ersetzen. Bei Bauteilen, die erhebliche Materialdickenschhwankungen aufweisen, wie dies zum Beispiel bei Leitschaufelkränzen einer Gasturbine der Fall ist, wird zur Reparatur so vorgegangen, dass der beschädigte sowie zu erneuernde Abschnitt derart aus dem Bauteil herausgetrennt wird, dass entlang der Trennnaht und damit entlang der späteren Schweißnaht eine möglichst gleichmäßige Materialdicke vorliegt. Hierdurch soll gewährleistet werden, dass das Schweißen entlang der gesamten Schweißnaht möglichst gleichmäßig und optimal durchgeführt werden kann. Diese aus dem Stand der Technik bekannte Vorgehensweise verfügt jedoch über den Nachteil, dass sich abhängig von dem aus dem zu reparierenden Bauteil herauszutrennenden Abschnitt und der Materialdickenverteilung des Bauteils sehr lange und komplexe Trennnähte und damit spätere Schweißnähte ergeben können. Weiterhin können durch derart komplexe sowie lange Schweißnähte umfangreiche Vorbereitungsschritte sowie Nachbearbeitungsschritte am zu reparierenden Bauteil erforderlich sein. Dies ist insgesamt von Nachteil.

Das Dokument US 6 332 272 B1 schützt ein Verfahren zur Reparatur einer innengekühlten Gasturbinenlaufschaufel. Dabei wird die beschädigte Schaufelspitze einschließlich einer den Schaufelhohlraum verschließenden, aufgelöteten Kappe entfernt. Anschließend wird eine neue Kappe aufgeschweißt und ein sogenannter Squealer durch Auftragschweißen generiert. Für letzteren wird bevorzugt ein Laserauftragschweißen verwendet.

Das Dokument US 6 542 843 B1 betrifft, ein Verfahren zur Erzeugung angepasster Strömungsflächen an integral beschaufelten Rotoren nach einem Fügeprozess, beispielsweise einem linearen Reibschweißprozess. Das hierfür erforderliche Materialabtragen erfolgt nach festigkeits- und strömungstechnischen Kriterien.

Das Dokument US 4 003 115 A offenbart ein Verfahren zur Herstellung von Förderschnecken mit gehärteten bzw. gepanzerten Kanten. Dabei wird auf die Kanten zuerst ein formgebendes Blechprofil aufgebracht. Dann werden mulden- bzw. rinnförmige Vertiefungen im Bereich des Blechprofils durch einen Spritzprozess mit verschleißfestem Werkstoff aufgefüllt. Somit entfällt eine aufwändige Nachbearbeitung.

Hiervon ausgehend liegt der vorliegenden Erfindung das Problem zu Grunde, ein neuartiges Verfahren zum Reparieren eines Bauteils, insbesondere eines statorseitigen Bauteils einer Gasturbine, zu schaffen.

Das erfindungsgemäße Verfahren zum Reparieren eines Bauteils ist im unabhängigen Patentanspruch 1 definiert.

Erfindungsgemäß wird der beschädigte Abschnitt derart aus dem zu reparierenden Bauteil herausgetrennt, dass die Länge einer Trennnaht und damit einer späteren Schweißnaht minimiert wird, wobei abhängig von der Materialdickenverteilung entlang der Trennnaht zur Bereitstellung einer möglichst gleichmäßigen Materialdicke entlang der späteren Schweißnaht vom Bauteil Material abgetragen wird, und wobei nach dem Verbinden des Bauteils mit dem Neuabschnitt durch Laserpulverauftragschweißen zumindest das abgetragene Material erneuert wird.

Im Sinne der hier vorliegenden Erfindung wird vorgeschlagen, die Trennnaht und damit die spätere Schweißnaht mit geringster Länge auszuführen und zwar weitestgehend unabhängig von der Materialdickenverteilung des zu reparierenden Bauteils. Um dennoch während des späteren Anschweißens eines den herausgetrennten Abschnitt ersetzenden Neuabschnitts entlang der Schweißnaht eine möglichst gleichmäßige Materialdicke bereitzustellen, wird im Bereich der Trennnaht vom zu reparierenden Bauteil Material abgetragen, wobei nach dem Verbinden des Bauteils mit dem Neuabschnitt zumindest diese abgetragene Material durch Laserpulverauftragschweißen erneuert wird. Dies hat den Vorteil, dass komplexe Geometrien von Trennnähten und Schweißnähten vermieden werden können. Ein zu reparierendes Bauteil braucht demnach nicht in viele Einzelteile zerlegt zu werden. Hierdurch ergeben sich unter anderem Kostenvorteile.

Nach einer vorteilhaften Weiterbildung der Erfindung wird abhängig von der Materialdickenverteilung entlang der Trennnaht zur Bereitstellung einer optimalen Schweißnaht-Materialdicke entlang der späteren Schweißnaht in Bereichen des Bauteils, in welchen die Materialdicke größer ist als die optimale Schweißnaht-Materialdicke, vom Bauteil Material abgetragen, wohingegen in Bereichen des Bauteils, in welchen die Materialdicke kleiner ist als die optimale Schweißnaht-Materialdicke, auf das Bauteil Material aufgetragen wird.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: eine ausschnittsweise Draufsicht auf ein zu reparierendes, sta- torseitiges Bauteils einer Gasturbine, nämlich auf einen Leit- schaufelkranz;
- Fig. 2: eine ausschnittsweise Seitensicht auf das zu reparierende, sta- torseitige Bauteil der Fig. 1;
- Fig. 3: eine ausschnittsweise Draufsicht auf das zu reparierende, sta- torseitige Bauteil der Fig. 1 zur Verdeutlichung des erfin- dungsgemäßen Verfahrens; und
- Fig. 4: eine ausschnittsweise Seitensicht auf das zu reparierende, sta- torseitige Bauteil der Fig. 3.

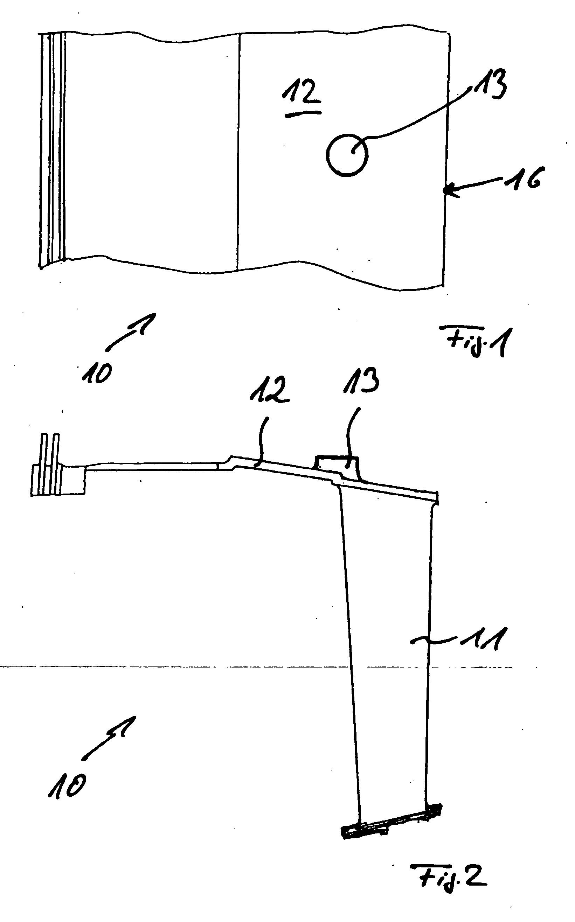

Nachfolgend wird die hier vorliegende Erfindung unter Bezugnahme auf Fig. 1 bis 4 in größerem Detail beschrieben.

Fig. 1 und 2 zeigen einen Ausschnitt aus einem statorseitigen Leitschaufelkranz 10 einer Gasturbine, wobei der Leitschaufelkranz 10 mehrere sich in radialer Richtung erstreckende und in Umfangsrichtung voneinander beabstandete Leitschaufeln 11 aufweist. Wie Fig. 1 und 2 entnommen werden kann, verfügt der Leitschaufelkranz 10 im Bereich eines radial außenliegenden Abschnitts 12 über einen gegenüber dem Abschnitt 12 hinausragenden Vorsprung 13; wobei der Vorsprung 13 eine Materialaufdickung darstellt. Bereits hieraus folgt, dass der Leitschaufelkranz 10 im Bereich des Abschnitts 12 über eine ungleichmäßige Materialdickenverteilung verfügt, nämlich über Abschnitte mit einer relativ geringen Materialdicke und über den Vorsprung 13 mit einer relativ großen Materialdicke.

Im nachfolgenden soll davon ausgegangen werden, dass zur Reparatur des in Fig. 1 und 2 gezeigten Leitschaufelkranzes 10 eine der Leitschaufeln 11 ausgetauscht werden soll. Soll nun zum Beispiel die in Fig. 2 dargestellte Leitschaufel 11 ausgetauscht werden, so ist unmittelbar ersichtlicht, dass sich die kürzeste Trennnaht zum Heraustrennen der Leitschaufel 11 aus dem Leitschaufelkranz 10 durch den Bereich des Vorsprungs 13 erstrecken würde. Da jedoch die Trennnaht die spätere Schweißnaht bildet und des weiteren ungleichmäßige Materialdicken im Bereich der Schweißnaht von Nachteil sind, würde nach dem Stand der Technik eine Trennnaht gewählt, die den Bereich des Vorsprungs 13 umfährt. Hierdurch ergibt sich unter anderem eine komplex geformte Trennnaht sowie spätere Schweißnaht.

Im Sinne der hier vorliegenden Erfindung wird vorgeschlagen, die zu ersetzende Leitschaufel 11 derart aus dem zu reparierenden Leitschaufelkranz 10 herauszutrennen, dass sich eine möglichst kurze Trennnaht und damit spätere Schweißnaht ergibt.

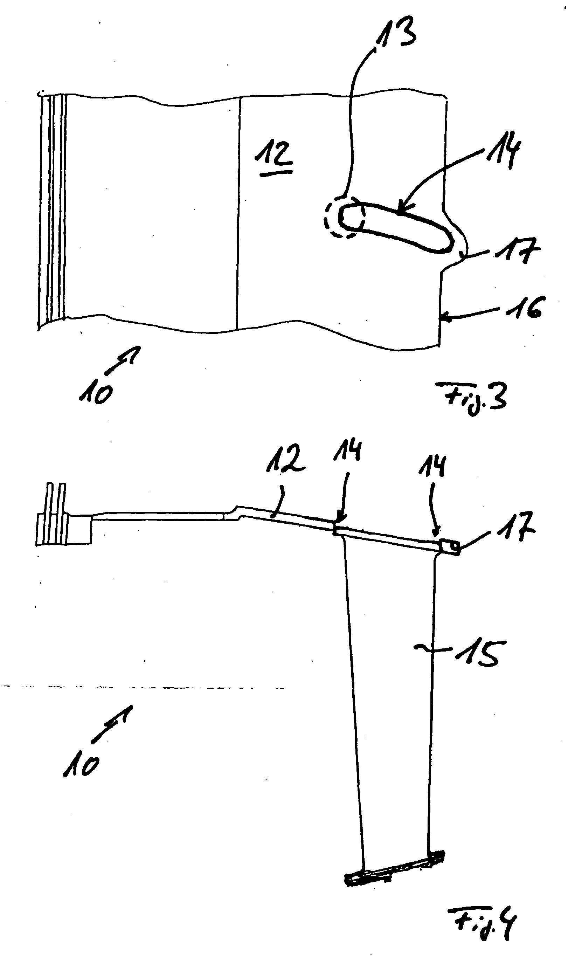

Eine derart minimale Trennnaht bzw. Schweißnaht ist in Fig. 3 mit der Bezugsziffer 14 gekennzeichnet. Fig. 3 kann entnommen werden, dass sich diese Trennnaht 14 und damit die spätere Schweißnaht durch den Bereich des Vorsprungs 13 erstreckt. Um dennoch über den Bereich der späteren Schweißnaht unabhängig von der Materialdickenverteilung des ursprünglichen Bauteils eine möglichst gleichmäßige Materialdicke bereitzustellen, wird im Sinne der hier vorliegenden Erfindung entlang der Trennnaht und damit der späteren Schweißnaht Material abgetragen. Im Ausführungsbeispiel der Fig. 3 wird der Vorsprung 13 abgetragen. Dies zeigt Fig. 4, die den Abschnitt 12 ohne den Vorsprung 13 zeigt. Weiterhin zeigt Fig. 4 eine die herauszutrennende Leitschaufel 11 ersetzende Leitschaufel 15, die im Bereich der Schweißnaht 14 über eine dem Abschnitt 12 angepasste Materialdicke verfügt. Hierdurch ist sichergestellt, dass eine Schweißnaht mit optimalen Eigenschaften bereitgestellt werden kann, ohne die Notwendigkeit komplex geführter Trennnähte bzw. Schweißnähte.

Es liegt demnach der hier vorliegenden Erfindung, abhängig von der Materialdickenverteilung entlang der kürzest gewählten Trennnaht zur Bereitstellung einer optimalen Schweißnaht-Materialdicke entlang der späteren Schweißnaht in Bereichen des Bauteils, die im Bereich der Trennnaht durch eine Materialaufdickung gekennzeichnet sind, Material abzutragen. In solchen Bereichen der Trennnaht, in welchen die Materialdicke demnach größer ist als eine optimale Schweißnaht-Materialdicke, wird vom Bauteil Material abgetragen. Es kann jedoch auch der Fall vorliegen, dass das zu reparierende Bauteil in einem Abschnitt der Trennnaht eine Materialdicke aufweist, die kleiner ist als die optimale Schweißnaht-Materialdicke. In diesem Fall ist es möglich, auf das Bauteil im Bereich der Trennnaht und damit späteren Schweißnaht durch Laserpulverauftragschweißen Material aufzutragen.

Wie insbesondere Fig. 3 entnommen werden kann, würde sich beim Heraustrennen der Leitschaufel 11 aus dem Leitschaufelkranz 10 die Trennnaht 14 in den Bereich einer seitlichen Begrenzungskontur 16 des Abschnitts 12 erstrecken und demnach "im Freien" endet. Eine Trennnaht sowie eine spätere Schweißnaht, die nicht allseitig von Material umschlossen ist, sondern vielmehr "im Freien" endet, kann zu erheblichen Verformungen des Bauteils führen. Daher wird im Sinne der hier vorliegenden Erfindung vor dem Heraustrennen der Leitschaufel 11 aus dem Leitschaufelkranz 10 im Bereich der Begrenzungskontur 16 eine Materialaufdickung 17 durch Laserpulverauftragschweißen aufgetragen, um zu gewährleisten, dass die Trennnaht 14 und damit spätere Schweißnaht allseitig von Werkstoff umschlossen ist.

Auch dies liegt im Grundgedanken der Erfindung, im gesamten Bereich der Schweißnaht eine optimale Schweißnaht-Materialdicke entweder durch Abtragen oder durch Auftragen von Material im Bereich des zu reparierenden Bauteils, nämlich im Bereich der Trennnaht 14 bzw. Schweißnaht, zu gewährleisten.

An dieser Stelle sei darauf hingewiesen, dass das Abtragen von Material sowie gegebenenfalls das Auftragen von Material zur Bereitstellung der möglichst gleichmäßigen Materialdicke entlang der späteren Schweißnaht 14 entweder vor dem Heraustrennen der zu ersetzenden Leitschaufel 11 oder nach dem Heraustrennen derselben durchgeführt werden kann. Muss zur Vermeidung von "im Freien" endenden Trennnähten Material aufgetragen werden, so erfolgt dies vor dem Heraustrennen des zu ersetzenden Bauteilabschnitts. Muss hingegen Material abgetragen werden, so erfolgt dies nach dem Heraustrennen des Bauteils, da auf diese Art und Weise Abtragarbeiten im Bereich des zu ersetzenden Bauteilabschnitts vermieden werden können.

Nach dem Verbinden der neuen Leitschaufel 15 (siehe Fig. 4) mit dem Leitschaufelkranz 10 durch Verschweißen, wird das zur Bereitstellung der gleichmäßigen Materialdicke entlang der Schweißnaht 14 abgetragene Material durch Laserpulverauftragschweißen erneuert. Im gezeigten Ausführungsbeispiel bedeutet dies, dass der Vorsprung 13, der zur Bereitstellung der optimalen Schweißnaht-Materialdicke abgetragen wurde, nach dem Verschweißen der Leitschaufel 15 mit dem Leitschaufelkranz 10 durch Laserpulverauftragschweißen erneuert wird.

Wurde hingegen zur Bereitstellung der optimalen Schweißnaht-Materialdicke Material aufgetragen, so wird dies im Sinne der hier vorliegenden Erfindung nach dem Schweißen abgetragen. Im gezeigten Ausführungsbeispiel würde dies bedeuten, dass nach dem Verbinden der Leitschaufel 15 mit dem Leitschaufelkranz 10 die Materialaufdickung 17 wieder abgetragen wird, sodass die durchgehende Begrenzungskontur 16 wiederhergestellt wird.

Im Anschluss an das Auftragen bzw. Abtragen von Material kann noch eine Oberflächenbearbeitung durchgeführt werden, um strömungstechnisch definierte Bauteilkonturen des reparierten Bauteils, nämlich des reparierten Leitschaufelkranzes, zu gewährleisten.

Mit dem erfindungsgemäßen Verfahren werden demnach komplexe Geometrien von Trennnähten sowie Schweißnähten bei der Reparatur von Bauteilen vermieden.

Dies gilt ebenfalls für die Neufertigung eines Bauteils. Lokale Vorsprünge oder Materialaufdickungen können nach dem Verbinden nachträglich durch Laserpulverauftragschweißen hergestellt werden. Hierdurch ergeben sich deutliche Kostenvorteile, ebenso logistische Vorteile und qualitative Vorteile, da einerseits einfache Schweißnähte und andererseits Schweißnähte mit einer gleichmäßigen Materialdicke bereitgestellt werden.

## Patentansprüche

1. Verfahren zum Reparieren eines Bauteils, insbesondere eines statorseitigen Bauteils einer Gasturbine wie eines Gehäuses oder eines Leitschaufelkranzes (10), wobei aus dem Bauteil ein beschädigter Abschnitt (11) herausgetrennt wird, und wobei ein den beschädigten sowie herausgetrennten Abschnitt ersetzender Neuabschnitt (15) mit dem Bauteil durch Schweißen fest verbunden wird,
**dadurch gekennzeichnet,**
**dass** der beschädigte Abschnitt (11) derart aus dem zu reparierenden Bauteil (10) herausgetrennt wird, dass die Länge einer Trennnaht (14) und damit einer späteren Schweißnaht minimiert wird, dass abhängig von der Materialdickenverteilung entlang der Trennnaht (14) zur Bereitstellung einer möglichst gleichmäßigen Materialdicke entlang der späteren Schweißnaht vom Bauteil (10) Material abgetragen wird, und dass nach dem Verbinden des Bauteils mit dem Neuabschnitt (15) durch Laserpulverauftragschweißen zumindest das abgetragene Material erneuert wird.

2. Verfahren nach Anspruch 1,
**dadurch gekennzeichnet,**
**dass** abhängig von der Materialdickenverteilung entlang der Trennnaht (14) zur Bereitstellung einer optimalen Schweißnaht-Materialdicke entlang der späteren Schweißnaht in Bereichen des Bauteils (10), in welchen die Materialdicke größer ist als die optimale Schweißnaht-Materialdicke, vom Bauteil Material abgetragen wird, wohingegen in Bereichen des Bauteils, (10) in welchen die Materialdicke kleiner ist als die optimale Schweißnaht-Materialdicke, auf das Bauteil Material aufgetragen wird.

3. Verfahren nach Anspruch 1 oder 2,
**dadurch gekennzeichnet,**
**dass** das Abtragen von Material sowie gegebenenfalls das Auftragen von Material zur Bereitstellung der möglichst gleichmäßigen Materialdicke entlang der späteren Schweißnaht entweder vor dem Heraustrennen oder nach dem Heraustrennen des beschädigten Abschnitts (11) durchgeführt wird.

4. Verfahren nach einem der Ansprüche 1 bis 3,
**dadurch gekennzeichnet,**
**dass** der beschädigte Abschnitt (11) mit einer geringsten Länge einer Trennnaht (14) und damit einer späteren Schweißnaht aus dem zu reparierenden Bauteil (10) herausgetrennt wird.

5. Verfahren nach einem der Ansprüche 1 bis 4,
**dadurch gekennzeichnet,**
**dass** nach dem Verbinden des Bauteils (10) mit dem Neuabschnitt (15) einerseits im Bereich des Bauteils (10) das vom Bauteil abgetragene Material sowie andererseits im Bereich des Neuabschnitts (15) durch Laserpulverauftragschweißen Material zur Bereitstellung definierter Bauteilkonturen des reparierten Bauteils aufgetragen wird.

6. Verfahren nach Anspruch 5,
**dadurch gekennzeichnet,**
**dass** im Anschluss hieran eine Oberflächenbearbeitung durchgeführt wird.

7. Verwendung eines Verfahren nach einem der Ansprüche 1 bis 6 zur Reparatur statorseitiger Bauteile einer Gasturbine, insbesondere eines Flugtriebwerks, wie eines Gehäuses oder eines Leitschaufelkranzes (10).

## Claims

1. A method for repairing a component, in particular a stator-side component of a gas turbine, such as a housing or a vane ring (10), wherein a damaged section (11) is separated out from the component, and wherein a new section (15) that replaces the damaged and separated-out section is fixedly connected to the component by welding,
**characterised in that**
the damaged section (11) is separated out from the component (10) that is to be repaired in such a way that the length of a separating seam (14) and thus of a subsequent weld seam is minimized, **in that** depending on the material-thickness distribution along the separating seam (14) in order to provide a material thickness that is as uniform as possible along the subsequent weld seam material is removed from the component (10), and **in that** after the component has been connected to the new section (15) by means of laser powder build-up welding at least the material that has been removed is renewed.

2. A method according to claim 1,
**characterised in that**
depending on the material-thickness distribution along the separating seam (14), in order to provide an optimum weld-seam material thickness along the subsequent weld seam, material is removed from the component (10) in regions of the component in which the material thickness is greater than the optimum weld-seam material thickness, whilst material is applied to the component (10) in regions of the component in which the material thickness is smaller than the optimum weld-seam material thickness.

3. A method according to claim 1 or 2,
**characterised in that**
the removal of material and also, if applicable, the application of material in order to provide the most uniform material thickness possible along the subsequent weld seam is carried out either before or after the damaged section (11) has been separated out.

4. A method according to one of claims 1 to 3,
**characterised in that**
the damaged section (11) is separated out from the component (10) that is to be repaired with a minimum length of a separating seam (14) and thus of a subsequent weld seam.

5. A method according to one of claims 1 to 4,
**characterised in that**
after the connection of the component (10) to the new section (15), on the one hand the material that has been removed from the component (10) is applied in the region of the component and on the other hand material is applied in the region of the new section (15) by means of laser powder build-up welding, in order to provide defined component contours of the repaired component.

6. A method according to claim 5,
**characterised in that**
following on from this, surface-treatment is carried out.

7. Use of a method according to one of claims 1 to 6 for the repair of stator-side components of a gas turbine, in particular of an aircraft engine, such as a housing or a vane ring (10).

## Revendications

1. Procédé pour réparer une élément structurel, en particulier un élément structurel côté stator d'une turbine à gaz, comme d'un carter ou d'une couronne d'aubes fixes (10), dans lequel une portion endommagée (11) est séparée de l'élément structurel, et dans lequel une portion neuve (15) remplaçant la portion endommagée et séparée est solidarisée avec l'élément structurel par soudage, **caractérisé en ce que** la portion endommagée (11) est séparée de l'élément structurel à réparer (10) de telle sorte que la longueur d'un joint de séparation (14), et donc d'une soudure ultérieure, soit minimisée, **en ce qu'**en fonction de la répartition de l'épaisseur de matière le long du joint de séparation (14), en vue de fournir une épaisseur de matière aussi homogène que possible le long de la soudure ultérieure, de la matière est enlevée de l'élément structurel (10), et **en ce qu'**après que l'élément structurel a été relié à la portion neuve (15) par soudage par dépôt de poudre au laser, au moins la matière enlevée est remplacée.

2. Procédé selon la revendication 1, **caractérisé en ce qu'**en fonction de la répartition de l'épaisseur de matière le long du joint de séparation (14), en vue de fournir une épaisseur de matière de soudure optimale le long de la soudure ultérieure, dans des zones de l'élément structurel (10) où l'épaisseur de matière est supérieure à l'épaisseur de matière de soudure optimale, de la matière est enlevée de l'élément structurel, alors que dans des zones de l'élément structurel (10) où l'épaisseur de matière est inférieure à l'épaisseur de matière de soudure optimale, de la matière est déposée sur l'élément structurel.

3. Procédé selon la revendication 1 ou 2, **caractérisé en ce que** l'enlèvement de matière ainsi que le cas échéant le dépôt de matière pour fournir l'épaisseur de matière aussi homogène que possible le long de la soudure ultérieure est effectuée soit avant la séparation soit après la séparation de la portion endommagée (11).

4. Procédé selon l'une quelconque des revendications 1 à 3, **caractérisé en ce que** la portion endommagée (11) est séparée de l'élément structurel (10) à réparer avec une longueur inférieure d'un joint de séparation (14) et donc d'une soudure ultérieure.

5. Procédé selon l'une quelconque des revendications 1 à 4, **caractérisé en ce qu'**après la connexion de l'élément structurel (10) à la portion neuve (15), d'une part au niveau de l'élément structurel (10), la matière enlevée de l'élément structurel est déposée, et d'autre part au niveau de la portion neuve (15), de la matière est déposée par soudage par dépôt de poudre au laser, en vue de fournir des contours d'élément structurel définis de l'élément structurel réparé.

6. Procédé selon la revendication 5, **caractérisé en ce qu'**ensuite, un traitement de surface est effectué.

7. Utilisation d'un procédé selon l'une quelconque des revendications 1 à 6 pour réparer des éléments structurels côté stator d'une turbine à gaz, en particulier d'un groupe motopropulseur, comme d'un carter ou d'une couronne d'aubes fixes (10).
